Europäisches Patentamt

(19) European Patent Office

Office européen des brevets

(11) Numéro de publication : **0 287 452 B1**

(12) **FASCICULE DE BREVET EUROPEEN**

(45) Date de publication du fascicule du brevet :
**13.03.91 Bulletin 91/11**

(21) Numéro de dépôt : **88400876.4**

(22) Date de dépôt : **12.04.88**

(51) Int. Cl.⁵ : **H01J 9/32, C03B 25/06**

(54) **Procédé d'élimination des contraintes du verre d'embases pour tubes à vide, et four de recult mettant en oeuvre ce procédé.**

(30) Priorité : **17.04.87 FR 8705488**

(43) Date de publication de la demande :
**19.10.88 Bulletin 88/42**

(45) Mention de la délivrance du brevet :
**13.03.91 Bulletin 91/11**

(84) Etats contractants désignés :
**DE GB IT NL**

(56) Documents cités :
**FR-A- 2 207 098
LU-A- 57 574
US-A- 1 944 743
US-A- 2 956 373
US-A- 3 477 835
THE GLASS INDUSTRY, vol. 56, no. 5, mai
1975, pages 18-20; R.A. FULLER: "Lehr design
to reduce power and fuel costs"**

(73) Titulaire : **VIDEOCOLOR
7, boulevard Romain-Rolland
F-92128 Montrouge (FR)**

(72) Inventeur : **Prost, Alain
THOMSON-CSF SCPI 19, avenue de Messine
F-75008 Paris (FR)**
Inventeur : **Rochette, Maxime
THOMSON-CSF SCPI 19, avenue de Messine
F-75008 Paris (FR)**
Inventeur : **Besson, Paul
THOMSON-CSF SCPI 19, avenue de Messine
F-75008 Paris (FR)**
Inventeur : **Foussadier, André
THOMSON-CSF SCPI 19, avenue de Messine
F-75008 Paris (FR)**

(74) Mandataire : **Einsel, Robert, Dipl.-Ing.
Deutsche Thomson-Brandt GmbH Patent- und
Lizenzabteilung Göttinger Chaussee 76
W-3000 Hannover 91 (DE)**

EP 0 287 452 B1

## Description

L'invention concerne un procédé pour recuire dans un four des embases de tubes à vide, afin d'éliminer les contraintes résiduelles du verre, et concerne particulièrement un moyen pour éviter l'oxydation du ou des conducteurs électriques que comportent les embases. L'invention concerne également un four de recuit mettant en oeuvre ce procédé.

Les embases de tube à vide, de tube cathodique par exemple, sont généralement en verre et ont la forme générale d'une galette traversée par un ou des conducteurs métalliques. Le ou les conducteurs métalliques permettent de relier, électriquement, des électrodes contenues dans le tube à vide à des éléments extérieurs au tube à vide.

Les embases sont habituellement fabriquées en série, à partir de deux pièces en verre cylindriques qui sont chauffées, à l'aide de brûleurs généralement, et qui sont ensuite pressées l'une contre l'autre dans un moule ; le ou les conducteurs métalliques étant enrobés dans le verre fondu lors de l'opération de pressage des deux pièces en verre.

Les embases ainsi obtenues doivent être recuites afin d'éliminer les contraintes résiduelles du verre. Ce recuit des embases est effectué généralement en soumettant les embases à un cycle prédéterminé de températures. Ceci peut être obtenu en faisant passer les embases dans un four : à leur entrée dans le four, les embases sont chauffées de manière à être rapidement portées à une température de l'ordre de 500°C ; en continuant leur progression dans le four, les embases sont ensuite refroidies lentement, particulièrement à partir d'une limite en température supérieure de l'ordre de 450°C, jusqu'à une limite en température inférieure de l'ordre de 390°C ; ce gradient de température étant établi sur une longueur donnée du four qui, en combinaison avec la vitesse de progression des embases, fait que la température des embases passe progressivement de la limite supérieure à la limite inférieure en un temps de l'ordre de 15 min environ ; les embases étant ramenées à la température ambiante à la sortie du four, par des moyens extérieurs au four.

Cette méthode est particulièrement bien adaptée à une fabrication en série. Cependant, on observe un défaut, qui n'a pas un caractère systématique, et qui consiste en ce que les conducteurs électriques des embases présentent une oxydation légère, mais suffisante pour nuire gravement à la qualité des soudures entre les conducteurs des embases et les électrodes des tubes à vide ; ce défaut étant d'autant plus affirmé quand les conducteurs des embases, généralement en nickel, ont été désoxydés préalablement à leur passage dans le four de recuit, par réduction dans un courant d'hydrogène ; les conducteurs étant alors rendus très actifs chimiquement. Il en résulte qu'après l'opération de recuit des embases, il est nécessaire de désoxyder à nouveau les conducteurs électriques, par microbillage par exemple, alors que ceux-ci comportaient un état de surface tout à fait compatible pour réaliser les soudures, par soudure électrique par résistances par exemple, avant que ne soit effectuée l'opération de recuit des embases.

L'objet de la présente invention est de perfectionner la méthode de recuit des embases ci-dessus expliquée, de sorte à obtenir que le ou les conducteurs électriques portés par chaque embase, présentent un état de surface compatible avec les soudures envisagées, exempt notamment d'oxydation, y compris dans le cas où ces conducteurs ont été préalablement désoxydés par réduction dans un courant d'hydrogène. L'invention concerne également un four de recuit d'embases mettant en oeuvre le procédé selon l'invention.

La présente invention résulte d'un effet inattendu, obtenu au cours d'une opération de contrôle des températures dans la longueur du four de recuit. Au cours de cette opération de contrôle de température, un ou plusieurs capteurs de température ont été placés dans le four à des positions dont la température devait être connue avec précision : les capteurs de température étaient reliés à un appareil de mesure de température, extérieur au four, par l'intermédiaire d'un fil électriquement conducteur contenu dans une gaine isolante prévue pour de hautes températures. Après qu'aient été relevées les températures dans le four, les auteurs de l'invention ont observés que les conducteurs électriques d'une série d'embases ne présentaient pas d'oxydation, et ils ont pensé à rechercher s'il y avait une corrélation dans le temps entre la période de passage de cette série d'embases dans le four, et ces mesures de températures dans le four ; ayant trouvé que cette corrélation dans le temps existait, ils ont pensé que l'amélioration de la qualité de surface des conducteurs électriques, sur cette série d'embases, était liée à la nature de la gaine isolante du fil électrique servant à relier les capteurs de températures à l'appareil de mesure. Des essais ultérieurs ont permis de confirmer la justesse de ce raisonnement.

Selon l'invention, un procédé d'élimination des contraintes résiduelles du verre dans des embases, consistant à soumettre les embases à au moins un cycle prédéterminé de températures en faisant passer les embases dans un four, chaque embase comportant au moins un conducteur électrique, est caractérisé en ce qu'il consiste à placer dans le four un élément dont au moins une partie est en silicone ou un matériau à base de silicone, durant le passage des embases dans le four.

L'invention sera mieux comprise grâce à la description qui suit, faite à titre d'exemple non limitatif, et à la lecture de l'unique figure qui représente, par une vue en perspective, la configuration générale d'un four de recuit mettant en oeuvre le procédé selon l'invention.

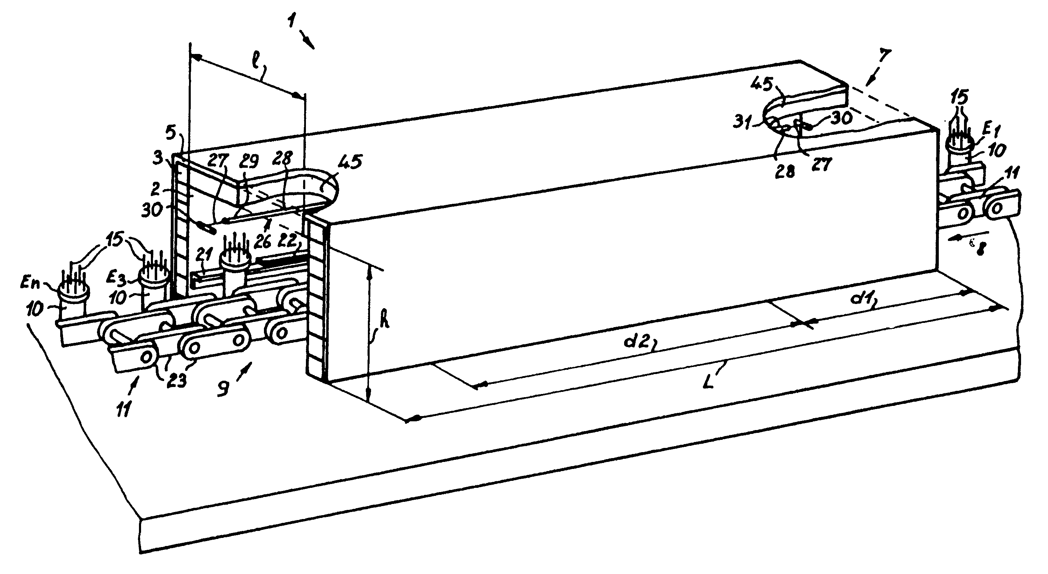

La figure 1 montre schématiquement, à titre d'exemple non limitatif, un four 1 de type tunnel, dont la section est rectangulaire avec une largeur intérieure l d'environ 0,60 mètre, et une hauteur h intérieure d'environ 0,40 mètre ; le four 1 ayant une longueur L de l'ordre de 6 m. Dans l'exemple non limitatif décrit, les parois intérieures 2 du four sont constituées par des briques réfractaires 3, et la paroi extérieure est formée par une ou plusieurs tôles 5 en acier inoxydable.

Des embases E1, E2,..., En de tubes à vide, de tubes cathodiques par exemple (non représentés), traversent le four 1 selon sa longueur L, dans le sens représenté par une flèche 8 par exemple, depuis une première extrémité 7 qui constitue l'entrée du four jusqu'à une seconde extrémité 9 qui est la sortie du four. Dans l'exemple non limitatif décrit, les deux extrémités 7, 9 du four 1 sont ouvertes à l'air ambiant.

Chaque embase E1 à En comporte au moins un conducteur électrique 15, en nickel par exemple, en dépassement par rapport au verre de l'embase, et dont une partie (non représentée) est noyée dans le verre. Les embases E1 à En sont transportées à l'extérieur et à l'intérieur du four à l'aide d'un dispositif de convoyage d'un type en lui-même connu, comportant par exemple une chaîne 11 rendue mobile dans le sens montré par la flèche 8 à l'aide de moyens moteurs classiques (non représentés). Les embases E1,...,En sont portées chacune dans un godet 10 lui-même fixé à la chaîne 11.

Dans l'exemple non limitatif de la description, le four 1 comporte, de manière conventionnelle, des résistances électriques (non représentées) destinées à chauffer l'intérieur du four, de manière que les embases E1 à En qui pénètrent dans le four par l'entrée 7, soient d'une part portées rapidement à une température élevée de l'ordre de 500°C par exemple, sur une première distance d1 de la longueur L du four ; d'autre part, les embases E1,...,En sont ensuite soumises sur une seconde distance d2, au gradient de température précédemment mentionné qui permet d'éliminer les contraintes du verre ; des dispositifs de régulation de températures (non représentés) étant utilisés à cette fin, de manière classique.

Selon une caractéristique de l'invention, le four 1 contient du silicone ou un produit à base de silicone.

La présence de silicone, ou de produits à base de silicone à l'intérieur du four 1, évite l'oxydation des conducteurs électriques 15 des embases E1 à En. Ceci a été démontré par des essais répétés, effectués comme suite à l'effet inattendu observé par les auteurs de l'invention, et provoqué par la présence d'un ou plusieurs fils conducteurs électriques, du type haute température, contenus dans une gaine isolante prévue pour être placée à des températures élevées ; l'examen d'un tel fil haute température ayant montré qu'il était composé de fils de nickel torsadés, recouverts de laine de verre et d'un élastomère de silicone.

Les auteurs de l'invention pensent que, probablement, le silicone se décompose, et par suite modifie sensiblement et localement l'atmosphère du four, notamment par une consommation d'oxygène.

Des essais ultérieurs ont montré que l'oxydation des conducteurs électriques 15 des embases était évitée également avec du silicone sous la forme d'un mastic, déposé le long du trajet des embases E1 à En dans le four 1, trajet qui est symbolisé sur la figure 1 par la longueur L du four. Ainsi par exemple, le mastic silicone peut être disposé selon une bande 22, sur une cornière 21 qui est placée dans le four parallèlement à la longueur L de ce dernier ; la bande 22 pouvant avoir une longueur inférieure à celle du four 1. Le mastic silicone peut également être déposé sur un ou plusieurs maillons 23 de la chaîne 11, de manière que du silicone soit toujours présent dans la longueur L du four ; le mastic silicone est ainsi introduit dans le four par le mouvement de la chaîne 11, ce qui permet de le renouveler facilement.

Le silicone ou produit à base de silicone, a une action limitée dans le temps, de sorte qu'il doit être remplacé dès que l'on constate une perte de son efficacité, ou à la fin de périodes dont la durée dépend du régime de fonctionnement du four et qui sont à déterminer empiriquement.

Aussi, une version préférée de l'invention consiste à utiliser un élastomère de silicone sous la forme d'un câble siliconé 26, ayant sensiblement la longueur L du four ; son remplacement est ainsi facilité du fait qu'il peut être attaché par une extrémité 29 à l'un des maillons 23 de sorte à traverser le four 1 grâce au mouvement de la chaîne 11, l'extrémité opposée 31 du câble 26 restant du coté de l'entrée 7 du four 1. Le câble siliconé 26 peut être constitué d'un fil électrique 27 recouvert d'un revêtement 28 haute température à base de silicone ; l'avantage d'un tel câble siliconé est qu'il existe tout fait dans l'industrie où il est d'un usage courant dans d'autres applications, et qu'il est facile à approvisionner.

Dans l'exemple non limitatif de la description, le câble siliconé 26 est tendu dans la longueur L du four 1. A cette fin, il est fixé à chacune de ses extrémités 29, 31 (visibles grâce à des ouvertures réalisées dans le dessin de la voute 45 du four) par le fil électrique 27, à des montants 30 scellés dans la paroi intérieure 2 du four, à proximité des extrémités 7, 9 de ce dernier ; mais le câble siliconé 26 peut tout aussi bien être plus long que le four en étant fixé à des montants extérieurs au four.

Il est à signaler qu'avec un câble siliconé 26 du type fil électrique à haute température, ayant une longueur de l'ordre de 6 m et un diamètre de l'ordre de 2,5 millimètres, il est possible de recuire 250.000 embases en évitant l'oxydation des conducteurs électriques de ces embases.

## Revendications

1. Procédé d'élimination des contraintes résiduelles du verre dans des embases, consistant à soumettre les embases (E1,...,En) à au moins un cycle prédéterminé de températures en faisant passer les embases (E1,..., En) dans un four (1), chaque embase (E1 à En) comportant au moins un conducteur électrique (15), caractérisé en ce qu'il consiste à placer dans le four un élément (26, 22) dont au moins une partie est constituée par du silicone ou un matériau (28) à base de silicone, durant le passage des embases (E1 à En), afin d'éviter une oxydation des conducteurs électriques (15).

2. Procédé selon la revendication 1, caractérisé en ce que ledit élément (26) comporte un élastomère de silicone.

3. Procédé selon la revendication 1, caractérisé en ce que ledit élément (22) est constitué par un mastic de silicone (22).

4. Procédé selon l'une des revendications 1 ou 2, caractérisé en ce qu'il consiste à tendre, à l'intérieur du four (1), un câble (26) dont au moins une partie est un élastomère de silicone.

5. Procédé selon la revendication 4, caractérisé en ce que le câble (26) est tendu sensiblement le long d'un trajet (L) selon lequel les embases (E1 à En) traversent le four (1).

6. Procédé selon l'une des revendications 4 ou 5, caractérisé en ce que le câble (26) est constitué par un fil (27) électriquement conducteur ayant une gaine isolante (28) dont au moins une partie est du silicone.

7. Procédé selon la revendiucation 6, caractérisé en ce que le fil électriquement conducteur (27) est en nickel.

8. Procédé selon la revendication 1, caractérisé en ce que les conducteurs électriques (15) des embases (E1 à En) sont en nickel.

9. Procédé selon la revendication 3, les embases (E1, En) étant portées par une chaîne (11) mobile, caractérisé en ce que le mastic silicone est déposé sur la chaîne (11).

10. Procédé selon la revendication 3, caractérisé en ce que le mastic silicone est déposé dans le four (1) selon une bande (22) disposée le long d'un trajet (L) des embases (E1,...,En).

11. Procédé selon l'une des revendications précédentes, caractérisé en ce que le four (1) est ouvert à l'air ambiant.

12. Procédé selon l'une des revendications précédentes, caractérisé en ce que le four (1) a la forme d'un tunnel dont au moins une extrémité (9) est ouverte à l'air ambiant et dont une longueur (L) représente le trajet des embases dans le four (1).

13. Four de recuit pour embases de tube à vide, le four (1) ayant la forme d'un tunnel dans lequel des embases (E1,..., En) sont transportées et effectuent un trajet correspondant à une longueur (L) du tunnel, les embases (E1 à En) étant soumises durant ledit trajet (L) à au moins un cycle prédéterminé de températures, chaque embase (E1 à En) comportant au moins un conducteur électrique (15), caractérisé en ce que le four (1) contient un élément (26, 22) dont au moins une partie est en silicone ou en un matériau à base de silicone.

14. Four selon la revendication 13, caractérisé en ce que ledit élément (26) est constitué par un fil (27) électriquement conducteur ayant une gaine isolante (28) dont au moins une partie est en silicone.

15. Four selon la revendication 14, caractérisé en ce que le fil électriquement conducteur (27) est en nickel.

16. Four selon la revendication 13, caractérisé en ce que ledit élément (22) est constitué par un mastic de silicone.

17. Four selon la revendication 13, caractérisé en ce que au moins une des extrémités (7, 9) du four (1) est ouverte à l'air ambiant.

## Ansprüche

1. Verfahren zur Beseitigung der Restspannungen des Glases in Sockeln, darin bestehend, daß die Sockel (E1,..., En) mindestens einem vorbestimmten Temperaturzyklus unterworfen werden, indem die Sockel (E1,..., En) durch einen Ofen (1) laufen gelassen werden, wobei jeder Sockel (E1 bis En) mindestens einen elektrischen Leiter (15) trägt, dadurch gekennzeichnet, daß es darin besteht, während des Durchlaufs der Sockel (E1 bis En) ein Teil (26, 22) in den Ofen zu setzen, das mindestens teilweise aus Silikon oder einem Material (28) auf Silikonbasis besteht, um eine Oxydation der elektrischen Leiter (15) zu vermeiden.

2. Verfahren gemäß Patentanspruch 1, dadurch gekennzeichnet, daß das genannte Teil (26) ein Silikonelastomer trägt.

3. Verfahren gemäß Patentanspruch 1, dadurch gekennzeichnet, daß das genannte Teil (22) aus einem Silikonkitt (22) besteht.

4. Verfahren gemäß einem der Patentansprüche 1 oder 2, dadurch gekennzeichnet, daß es darin besteht, im Inneren des Ofens (1) ein Kabel (26) zu spannen, das mindestens teilweise aus einem Silikonelastomer besteht.

5. Verfahren gemäß Patentanspruch 4, dadurch gekennzeichnet, daß das Kabel (26) im wesentlichen entlang einer Bahn (L) gespannt wird, gemäß der die Sockel (E1 bis En) den Ofen (I) durchlaufen.

6. Verfahren gemäß einem der Patentansprüche 4 oder 5, dadurch gekennzeichnet, daß das Kabel (26) aus einem elektrisch leitenden Draht (27) mit einem isolierenden Mantel (28) besteht, der mindestens teilweise aus Silikon besteht.

7. Verfahren gemäß Patentanspruch 6, dadurch gekennzeichnet, daß der elektrisch leitende Draht (27) aus Nickel besteht.

8. Verfarhen gemäß Patentanspruch 1, dadurch gekennzeichnet, daß die elektrischen Leiter (15) der Sockel (E1 bis En) aus Nickel bestehen.

9. Verfahren gemäß Patentanspruch 3, in dem die Sockel (E1,..., En) von einer beweglichen Kette (11) getragen werden, dadurch gekennzeichnet, daß der Silikonkitt auf die Kette (11) aufgetragen wird.

10. Verfahren gemäß Patentanspruch 3, dadurch gekennzeichnet, daß der Silikonkitt einem entlang einer Bahn (L) der Sockel (E1,... En) angeordneten Streifen (22) im Ofen (1) aufgetragen wird.

11. Verfahren gemäß einem der vorangehenden Patentansprüche, dadurch gekennzeichnet, daß der Ofen (1) zur Umgebungsluft offen ist.

12. Verfahren gemäß einem der vorangehenden Patentansprüche, dadurch gekennzeichnet, daß der Ofen (1) die Form eines Tunnels hat, mindestens dessen eines Ende (9) zur Umgebungsluft offen ist, und dessen Länge (L) die Bahn der Sockel im Ofen (1) darstellt.

13. Kühlofen für Sockel von Vakuumröhren, wobei der Ofen (1) die Form eines Tunnels hat, in dem die Sockel (E1,..., En) transportiert werden und eine einer Länge (L) des Tunnels entsprechende Bahn durchlaufen, wobei die Sockel (E1 bis En) auf der genannten Bahn (L) mindestens einem vorbestimmten Temperaturzyklus unterworfen werden und jeder Sockel (E1 bis En) mindestens einen elektrischen Leiter (15) trägt, dadurch gekennzeichnet, daß der Ofen (1) ein Teil (26, 22) enthält, das mindestens teilweise aus Silikon oder einem Material auf Silikonbasis besteht.

14. Ofen gemäß Patentanspruch 13, dadurch gekennzeichnet, daß das genannte Teil (26) aus einem elektrisch leitenden Draht (27) mit einem isolierenden Mantel (28) besteht, der mindestens teilweise aus Silikon besteht.

15. Verfahren gemäß Patentanspruch 13, dadurch gekennzeichnet, daß der elektrisch leitende Draht (27) aus Nickel besteht.

16. Verfahren gemäß Patentanspruch 13, dadurch gekennzeichnet, daß das genannte Teil (22) aus einem Silikonkitt besteht.

17. Verfahren gemäß Patentanspruch 13, dadurch gekennzeichnet, daß mindestens eines der Enden (7, 9) des Ofens (I) zur Umgebungsluft offen ist.

## Claims

1. Method for relieving the residual stresses of the glass of bases consisting in subjecting the bases (E1,..., En) to at least one predetermined temperature cycle by passing the bases (E1,..., En) through an oven (1), each base (E1 to En) comprising at least one conducting wire (15), characterized in that it consists in placing in the oven an element (26, 22), at least a part of which is made out of silicone or of a silicone-base material (28) during the passage of the bases (E1 to En) to avoid the oxidation of the conducting wires (15).

2. Method according to claim 1, characterized in that said element (26) comprises a silicone elastomer.

3. Method according to claim 1, characterized in that said element (22) is made of a silicone mastic (22).

4. Method according to one of the claims 1 or 2, characterized in that it consists in tightening, inside the oven (1), a cable (26), at least a part of which is a silicone elastomer.

5. Method according to claim 4, characterized in that the cable (26) is tightened approximately along a way (L) along which the bases (E1 to En) pass through the oven (1).

6. Method according to one of the claims 4 or 5, characterized in that the cable is made of an electrically conducting wire (27) which has an insulating sleeve (28), at least a part of which is made out of silicone.

7. Method according to claim 6, characterized in that the electrically conducting wire (27) is made out of nickel.

8. Method according to claim 1, characterized in that the conducting wires (15) of the bases (E1 to En) are made out of nickel.

9. Method according to claim 3, the bases (E1,..., En) being carried by a movable chain (11), characterized in that the silicone mastic is laid on the chain (11).

10. Method according to claim 3, characterized in that the silicone mastic is laid in the oven (1) in a strip (22) arranged along a way (L) of the bases (E1,..., En).

11. Method according to any of the preceding claims, characterized in that the oven (1) is open to the ambient air.

12. Method according to any of the preceding claims, characterized in that the oven (1) has the form of a tunnel, at least one end (9) of which is open to the ambient air and a length (L) of which represents the way of the bases through the oven (1).

13. An annealing oven for bases of vacuum tubes, the oven (1) having the form of a tunnel in which bases (E1,..., En) are transported on a way corresponding to a length (L) of the tunnel, the bases (E1 to En) being subjected during said way (L) to at least one predetermined temperature cycle, each base (E1 to En) comprising at least one conducting wire (15), characterized in that the oven (1) contains an element (26, 22), at least a part of which is made of silicone or a silicone-base material.

14. An oven according to claim 13, characterized in that said element (26) consists of a wire (27) which is electrically conducting and which has an insulating sleeve (28), at least a part of which is made out of silicone.

15. An oven according to claim 14, characterized in that the electrically conducting wire (27) is made out of nickel.

16. An oven according to claim 13, characterized in that said element (22) consists of a silicone mastic.

17. An oven according to claim 13, characterized in that at least one of the ends (7, 9) of the oven (1) is open to the ambient air.

EP 0 287 452 B1